# EUROPEAN PATENT APPLICATION

(11) **EP 4 745 426 A1**
(43) Date of publication of application: **20.05.2026**
(21) Application number: 24842922.7
(22) Date of filing: 28.06.2024
(51) Int. Cl.: F16F 1/387, F16F 15/08

(54) **VIBRATION-PROOF BUSHING**

(30) Priority: 14.07.2023 JP 2023116281
(71) Applicant: Prospira Corporation, Kanagawa prefecture 212-0013 (JP)
(72) Inventor: KOJIMA, Hiroki, Kawasaki city, Kanagawa 212-0013 (JP)
(74) Representative: V.O.
(86) International application number: PCT/JP2024/023594
(87) International publication number: WO 2025/018128

(57) **Abstract**

To provide an anti-vibration bush that can suppress the increase in the absolute spring constant caused by surging in the axial line direction. A anti-vibration bush includes: an outer cylinder 3; an inner cylinder 2; and a rubber body 4 positioned between the outer cylinder and the inner cylinder. In the anti-vibration bush, the rubber body includes: a main body rubber section 41 that couples the outer cylinder and the inner cylinder to each other in a radial direction and extends over only a part in a circumferential direction; a hollow 42 that is positioned in a circumferential direction region other than a circumferential direction region in which the main body rubber section extends and penetrates through the rubber body in an axial line direction; and a stopper rubber section 43 that faces the hollow in the radial direction. The stopper rubber section is coupled to the main body rubber section so as to be able to move in direct conjunction with the main body rubber section, and a secondary peak value or a tertiary peak value of an absolute spring constant in an axial line direction of the anti-vibration bush is lower by 20% or more as compared with a reference bushing B in which the main body rubber section of the anti-vibration bush is extended over an entire circumference and the rubber body is configured only of the main body rubber section.

## Description

### Technical Field

This invention relates to an anti-vibration bush.

### Background Art

There is a conventional anti-vibration bush in which a main body rubber section (main body rubber elastic body) is provided with a circumferential direction rubber mass section (elastic protrusion) that protrudes to the axial line direction outer side and extends to the circumferential direction (for example, Patent Literature 1).

### Citation List

### Patent Literature

PTL 1: WO2020/175640A1

### Summary of Invention

### Technical Problem

In the above technique, the increase in an absolute spring constant caused by surging in the direction perpendicular to the axial line direction can be effectively suppressed, but there is room for improvement for the suppression effect of the increase in the absolute spring constant caused by the surging in the axial line direction.

An object of this invention is to provide an anti-vibration bush that can suppress the increase in the absolute spring constant caused by surging in the axial line direction. Solution to Problem
[1] A anti-vibration bush includes: an outer cylinder; an inner cylinder; and a rubber body positioned between the outer cylinder and the inner cylinder. In the anti-vibration bush, the rubber body includes: a main body rubber section that couples the outer cylinder and the inner cylinder to each other in a radial direction and extends over only a part in a circumferential direction; a hollow that is positioned in a circumferential direction region other than a circumferential direction region in which the main body rubber section extends and penetrates through the rubber body in an axial line direction; and a stopper rubber section that faces the hollow in the radial direction. The stopper rubber section is coupled to the main body rubber section so as to be able to move in direct conjunction with the main body rubber section, and a secondary peak value or a tertiary peak value of an absolute spring constant in an axial line direction of the anti-vibration bush is lower by 20% or more as compared with a reference bushing in which the main body rubber section of the anti-vibration bush is extended over an entire circumference and the rubber body is configured only of the main body rubber section.
   With this, the increase in the absolute spring constant caused by surging in the axial line direction can be suppressed.
[2] In the anti-vibration bush according to the item [1], the stopper rubber section is configured such that while the inner cylinder vibrates in the axial line direction with respect to the outer cylinder, the stopper rubber section can be displaced to an opposite side of the main body rubber section in the axial line direction.
   With this, the increase in the absolute spring constant caused by surging in the axial line direction can be suppressed.
[3] In the anti-vibration bush according to the item [1] or the item [2], at least one stopper rubber section is positioned on a radial direction inner side with respect to at least a part of the hollow.
   In this case, the stopper rubber section that is to be in conjunction with the main body rubber section can be easily formed.
[4] In the anti-vibration bush according to the item [1] or the item [2], at least one stopper rubber section is positioned on a radial direction outer side with respect to at least a part of the hollow.
   In this case, the stopper rubber section that is to be in conjunction with the main body rubber section can be easily formed.
[5] In the anti-vibration bush according to the item [1] or the item [2], the two hollows are disposed to be spaced from each other in the radial direction, and at least one stopper rubber section is disposed between the two hollows.
   In this case, the stopper rubber section that is to be in conjunction with the main body rubber section can be easily formed.
[6] In the anti-vibration bush according to any one of items [1] to [5], the rubber body has a plurality of the hollows, and at least the one stopper rubber section faces each of the hollows in the radial direction.
   In this case, the stopper rubber section that is to be in conjunction with the main body rubber section can be easily formed.
[7] In the anti-vibration bush according to any one of items [1] to [6], an axial line direction length of the stopper rubber section is equal to or less than an axial line direction length of the main body rubber section.
   With this, the stopper rubber section moves in the axial line direction more easily, so that the increase in the absolute spring constant caused by the surging in the axial line direction can be further suppressed.
[8] In the anti-vibration bush according to any one of items [1] to [7], the rubber body is formed of a rubber made by crosslinking a rubber composition that contains a rubber component having, as main constituents, a natural rubber and a non-diene rubber.
   With this, the increase in the absolute spring constant caused by the surging can be further suppressed.
[9] In the anti-vibration bush according to any one of items [1] to [8], the rubber body further has a circumferential direction rubber mass section that protrudes from an end surface on at least one side in the axial line direction of the main body rubber section to the axial line direction outer side and extends in the circumferential direction.
   With this, the increase in the absolute spring constant caused by the surging can be further suppressed.

### Advantageous Effects of Invention

According to the present invention, it is possible to provide the anti-vibration bush that can suppress the increase in the absolute spring constant caused by surging in the axial line direction.

### Brief Description of Drawings

Fig. 1 is a front view illustrating a state at the time of seeing an anti-vibration bush according to an embodiment of the present invention from the axial line direction one side.
Fig. 2 is a perspective view illustrating the anti-vibration bush of Fig. 1.
Fig. 3 is a perspective view illustrating the anti-vibration bush of Fig. 1 together with a cross section passing through a center axial line.
Fig. 4 is a cross-sectional view in the axial line direction illustrating the anti-vibration bush of Fig. 1 by a cross section passing through the center axial line.
Fig. 5 is an explanatory view for explaining the operation for the case where in the anti-vibration bush of Fig. 4, an inner cylinder vibrates in the axial line direction with respect to an outer cylinder.
Figs. 6 are drawings illustrating the anti-vibration bush according to a modification example, in which Fig. 6(a) is a front view illustrating the state at the time of seeing the anti-vibration bush from the axial line direction one side, and Fig. 6(b) is a cross-sectional view in the axial line direction illustrating the anti-vibration bush by a cross section passing through the center axial line.

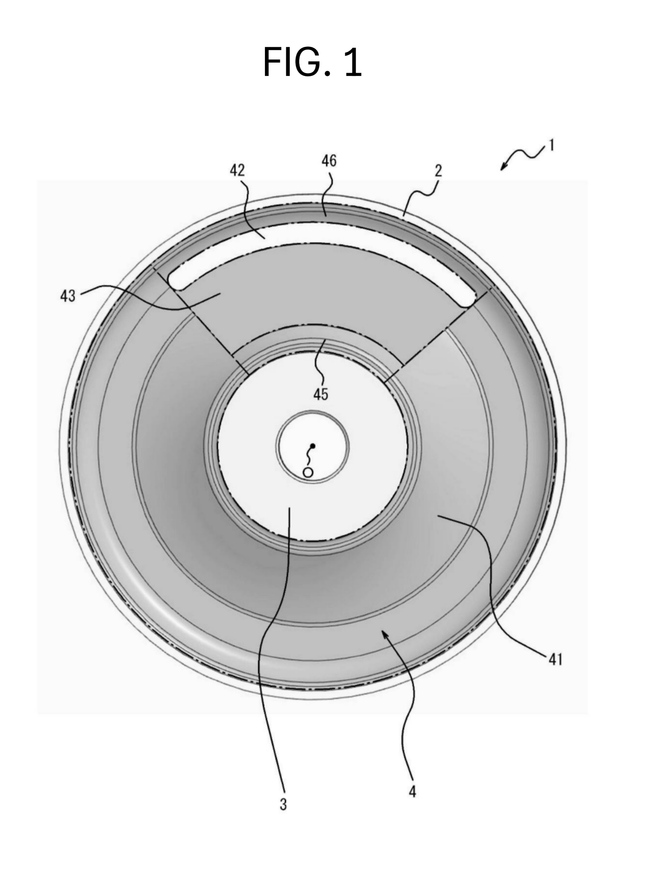

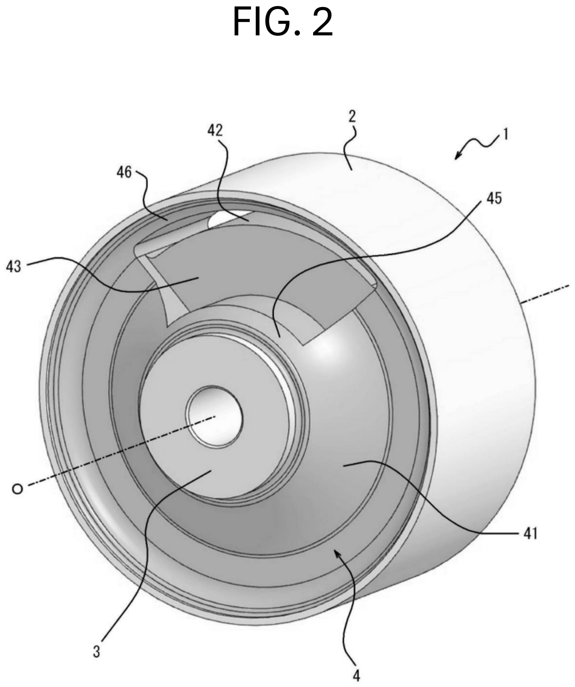

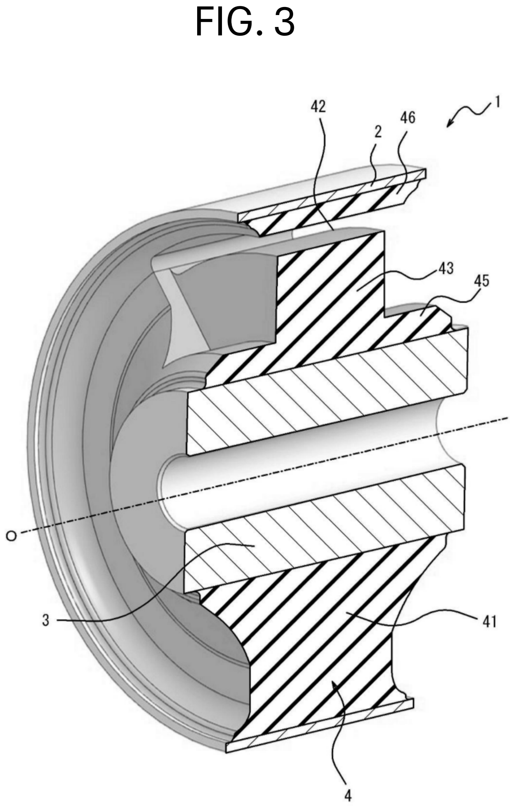

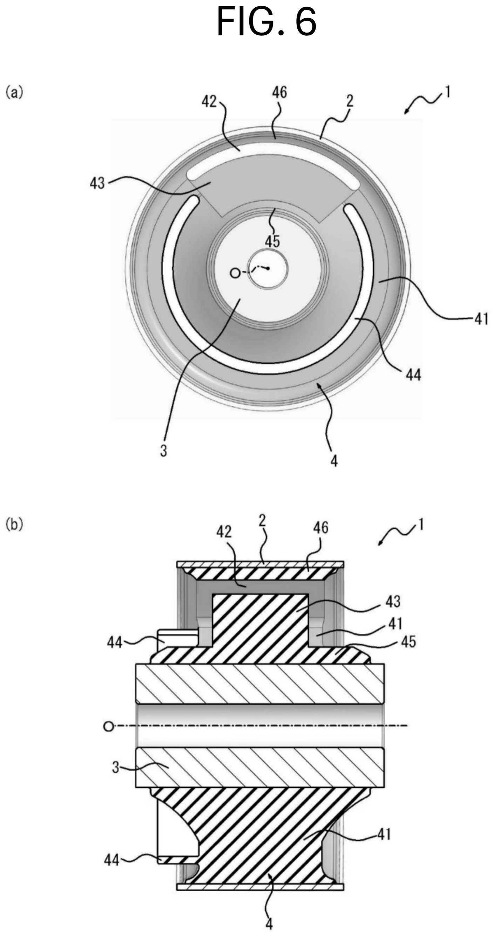

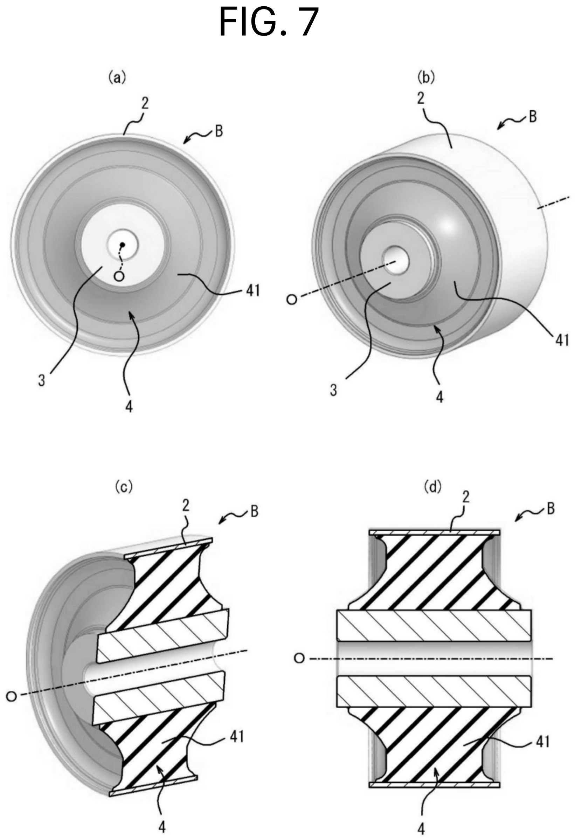

Figs. 7 are drawings illustrating a reference bushing corresponding to the anti-vibration bush according to the examples of Figs. 1 to 5 and the anti-vibration bush according to the example of Figs. 6, in which Fig. 7(a) is a front view illustrating the state at the time of seeing the reference bushing from the axial line direction one side, Fig. 7(b) is a perspective view of the reference bushing, Fig. 7(c) is a perspective view illustrating the reference bushing with a cross section passing through the center axial line, and Fig. 7(d) is a cross-sectional view in the axial line direction illustrating the reference bushing by a cross section passing through the center axial line.
Fig. 8 is a front view illustrating the state at the time of seeing a rubber body of the reference bushing corresponding to the anti-vibration bush according to the respective examples of Figs. 9, 10(a) to 10(d), 11(a) to 11(c), 12(a) to 12(c), 13(a) to 13(c), and 15 from the axial line direction one side.
Fig. 9 is a front view illustrating the state at the time of seeing the rubber body of the anti-vibration bush according to the first embodiment from the axial line direction one side.
Figs. 10(a) to 10(d) are each a cross-sectional view in the axial line direction illustrating the rubber body of the anti-vibration bush according to each of the second to fifth embodiments by a cross section passing through the center axial line.
Figs. 11(a) to 11(c) are each a front view illustrating the state at the time of seeing the rubber body of the anti-vibration bush according to each of the sixth to eighth embodiments from the axial line direction one side.
Figs. 12(a) to 12(c) are each a front view illustrating the state at the time of seeing the rubber body of the anti-vibration bush according to each of the first and second comparative examples and the ninth embodiment from the axial line direction one side.
Figs. 13(a) to 13(c) are each a front view illustrating the state at the time of seeing the rubber body of the anti-vibration bush according to each of the tenth to twelfth embodiments from the axial line direction one side.
Fig. 14 is a graph illustrating analysis results of the absolute spring constants in the axial line direction of the anti-vibration bush according to the first embodiment and the reference bushing corresponding thereto.
Fig. 15 is a front view illustrating the state at the time of seeing a part of the rubber body of the anti-vibration bush according to the thirteenth embodiment from the axial line direction one side.
Fig. 16 is a graph illustrating the analysis results of the absolute spring constants in the axial line direction of the anti-vibration bush according to the thirteenth embodiment and the reference bushing corresponding thereto.
Fig. 17 is a front view illustrating the state at the time of seeing the anti-vibration bush according to another modification example from the axial line direction one side.
Fig. 18 is a front view illustrating the state at the time of seeing the anti-vibration bush according to a still another modification example from the axial line direction one side.

### Description of Embodiments

For example, an anti-vibration bush according to the present invention is preferably used for the vibration-proof device (for example, the engine mount and the motor mount) of a vehicle, and is particularly preferably used for the vibration-proof device (for example, the motor mount) of an electric vehicle (EV).

Hereinbelow, an embodiment of the anti-vibration bush according to this invention will be exemplified and described with reference to the drawings.

Figs. 1 to 5 illustrate an anti-vibration bush 1 according to the embodiment of the present invention. For example, the anti-vibration bush 1 is preferably used for the vibration-proof device (for example, the engine mount and the motor mount) of the vehicle, and is particularly preferably used for the vibration-proof device (for example, the motor mount) of the electric vehicle (EV).

In the present description, in describing the configuration of the anti-vibration bush 1, unless otherwise specified, a configuration in which no input is added to the anti-vibration bush 1, and the anti-vibration bush 1 is in the stationary and normal state will be described.

Figs. 1 to 4 illustrate the state where the anti-vibration bush 1 is in the stationary and normal state. As illustrated in Figs. 1 to 4, the anti-vibration bush 1 includes an outer cylinder 2, an inner cylinder 3, and a rubber body 4.

The inner cylinder 3 is coaxial with the outer cylinder 2, and is positioned on an inner circumference side of the outer cylinder 2. The outer cylinder 2 and the inner cylinder 3 are each configured of, for example, a metal and/or a resin, and the like. The outer cylinder 2 is configured to be mounted to one of a vibration generation section (for example, an engine or a motor) and a vibration reception section (for example, a vehicle body) during use. The inner cylinder 3 is configured to be mounted to the other of the vibration generation section and the vibration reception section during use.

Each of the outer cylinder 2 and the inner cylinder 3 forms a cylindrical shape in the present embodiment, but may form any other tubular shape.

In the present description, a center axial line O of the outer cylinder 2 is assumed to be a center axial line O of the anti-vibration bush 1. In addition, in the present description, the direction parallel to the center axial line O of the anti-vibration bush 1 is referred to as an "axial line direction". The axial line direction may be oriented to any direction. In addition, in the present description, a side far from the center of the anti-vibration bush 1 in the axial line direction is referred to as the "axial line direction outer side", a side close to the center of the anti-vibration bush 1 in the axial line direction is referred to as the "axial line direction inner side", and the direction perpendicular to the center axial line O of the anti-vibration bush 1 is referred to as the "direction perpendicular to the axial line direction". In addition, unless otherwise specified, in the present description, a side close to the center axial line O of the anti-vibration bush 1 is referred to as an "inner circumference side", a side far from the center axial line O of the anti-vibration bush 1 is referred to as an "outer circumference side", a circumferential direction about the center axial line O of the anti-vibration bush 1 is referred to as a "circumferential direction", and a radial direction about the center axial line O of the anti-vibration bush 1 is referred to as a "radial direction".

The rubber body 4 is configured of a rubber, is positioned between the outer cylinder 2 and the inner cylinder 3 in the radial direction, and forms a substantially tubular shape (in the present embodiment, a substantially cylindrical shape). In the present embodiment, the rubber body 4 is integrally configured (that is, includes one member). The outer circumference surface of the rubber body 4 is in contact with the inner circumference surface of the outer cylinder 2, and is joined by, for example, vulcanization adhesion and the like. The inner circumference surface of the rubber body 4 is in contact with the outer circumference surface of the inner cylinder 3, and is joined by, for example, vulcanization adhesion and the like.

As illustrated in Figs. 1 to 4, the rubber body 4 includes one or a plurality of main body rubber sections 41 (in the present embodiment, one main body rubber section 41), one or a plurality of hollows 42 (in the present embodiment, one hollow 42), and one or a plurality of stopper rubber sections 43 (in the present embodiment, one stopper rubber section 43). In Fig. 1, the boundary lines between the respective portions of the rubber body 4 are indicated by dashed lines.

The main body rubber section 41 couples the outer cylinder 2 and the inner cylinder 3 to each other in the radial direction. That is, the main body rubber section 41 continuously extends over up to the outer circumference surface of the inner cylinder 3 along the radial direction from the inner circumference surface of the outer cylinder 2. In addition, the main body rubber section 41 extends over only a part in the circumferential direction.

The hollow 42 is a through hole that penetrates through the rubber body 4 in the axial line direction. Here, "penetrates through the rubber body 4 in the axial line direction" is not limited to the case where like the example of Fig. 1, the hollow 42 is surrounded by the rubber configuring the rubber body 4 over the entire circumference of the hollow 42 in plan view, and also includes the case where the hollow 42 directly faces the outer cylinder 2 or the inner cylinder 3 not via an outer circumference side covering rubber section 46 or an inner circumference side covering rubber section 45 described later, and thereby, the hollow 42 extends over the entire rubber body 4 in the axial line direction, and forms a groove (recess) opened to the outer cylinder 2 or the inner cylinder 3. The hollow 42 is positioned only in a circumferential direction region other than a circumferential direction region in which the main body rubber section 41 extends.

The stopper rubber section 43 faces the hollow 42 in the radial direction. That is, the stopper rubber section 43 is opposite to the hollow 42 in the radial direction, and the outer circumference surface or the inner circumference surface (in the present embodiment, the outer circumference surface) of the stopper rubber section 43 faces the hollow 42 to section a part of the hollow 42.

The stopper rubber section 43 is positioned only in the circumferential direction region other than the circumferential direction region in which the main body rubber section 41 extends.

In the present embodiment, the stopper rubber section 43 is coupled to the main body rubber section 41 at the end portion on at least one side (in the present embodiment, both sides) in the circumferential direction of the stopper rubber section 43.

The stopper rubber section 43 is coupled to the main body rubber section 41 so as to be able to move in direct conjunction with the main body rubber section 41. Therefore, for example, when the stopper rubber section 43 is coupled to the main body rubber section 41 via only the rubber section in thin film shape and the like provided on the inner circumference surface of the outer cylinder 2 or the outer circumference surface of the inner cylinder 3, the stopper rubber section 43 cannot move in conjunction with the main body rubber section 41, so that it cannot be said that "is coupled so as to be able to move in direct conjunction with the main body rubber section 41".

The stopper rubber section 43 has a function as a stopper that restricts the excessive relative displacement between the inner cylinder 3 and the outer cylinder 2 in the direction perpendicular to the axial line direction. More specifically, the stopper rubber section 43 is configured such that while the inner cylinder 3 relatively moves to the direction narrowing the width of the hollow 42 in the direction perpendicular to the axial line direction with respect to the outer cylinder 2, the stopper rubber section 43 is compressed between the inner cylinder 3 and the outer cylinder 2 after the hollow 42 is collapsed, so that the inner cylinder 3 is suppressed from being brought closer to the outer cylinder 2, and thereby, the inner cylinder 3 is restricted from being excessively brought close to the outer cylinder 2 in the direction perpendicular to the axial line direction. With this, the durability of the anti-vibration bush 1 can be improved.

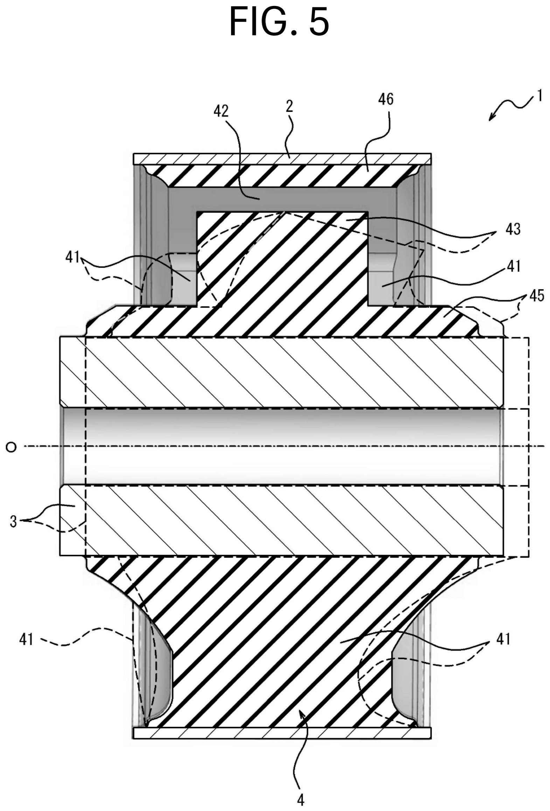

As described above, the stopper rubber section 43 faces the hollow 42 in the radial direction, and is coupled to the main body rubber section 41 so as to be able to move in direct conjunction with the main body rubber section 41. For that, as schematically illustrated by the dashed line in Fig. 5, while the inner cylinder 3 relatively vibrates in the axial line direction with respect to the outer cylinder 2, the stopper rubber section 43 can be displaced to the opposite side of the main body rubber section 41 in the axial line direction. (It should be noted that the dashed line of Fig. 5 indicates the state where when the inner cylinder 3 is displaced to the axial line direction one side (the right side of Fig. 5), the main body rubber section 41 is displaced to the axial line direction other side (the left side of Fig. 5), and the stopper rubber section 43 is displaced to the axial line direction one side (the right side of Fig. 5).) During this, the phase of the stopper rubber section 43 is not always completely opposite to the phase of the main body rubber section 41, but the stopper rubber section 43 can be at least partially displaced to the opposite side of the main body rubber section 41 in the axial line direction. With this, a part of the force to one of the sides in the axial line direction caused by the main body rubber section 41 is offset by the force to the axial line direction other side caused by the stopper rubber section 43. In this way, the stopper rubber section 43 can exhibit a function as a dynamic damper. With this, as compared with a reference bushing B (Figs. 7), the anti-vibration bush 1 can suppress the increase in an absolute spring constant (dynamic spring constant) caused by surging in the axial line direction, in other words, enables the lowered spring constant in the axial line direction.

As illustrated in Figs. 7, in the reference bushing B, the hollow 42 and the stopper rubber section 43 of the anti-vibration bush 1 are eliminated, the main body rubber section 41 of the anti-vibration bush 1 is extended over the entire circumference (that is, is extended such that the main body rubber section 41 is extended over the entire circumference), and the rubber body 4 is configured only of the main body rubber section 41 extended over the entire circumference. The anti-vibration bush 1 and the reference bushing B are different only in the above point of the rubber body 4, and are the same in points other than that (the outer diameter and the material of the rubber body 4, and the configurations, the dimensions, the materials and the like of the outer cylinder 2 and the inner cylinder 3).

The mass of the stopper rubber section 43 particularly greatly contributes to how much the anti-vibration bush 1 can suppress the increase in the absolute spring constant caused by the surging in the axial line direction (that is, how much the anti-vibration bush 1 enables the lowered spring constant in the axial line direction) as compared with the reference bushing B, and besides, the physical property and the material quality of the stopper rubber section 43 can also greatly contribute to this. In addition, the shapes of the stopper rubber section 43 and the hollow 42 are considered to be able to contribute to this at least to some extent.

In addition, as the deviation between a surging frequency of the main body rubber section 41 and a surging frequency of the stopper rubber section 43 is made to be smaller, the function as the dynamic damper of the stopper rubber section 43 can be exhibited more effectively.

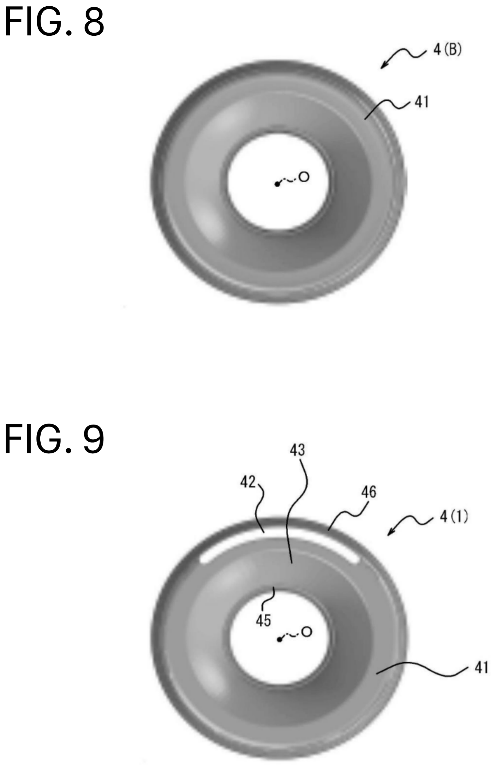

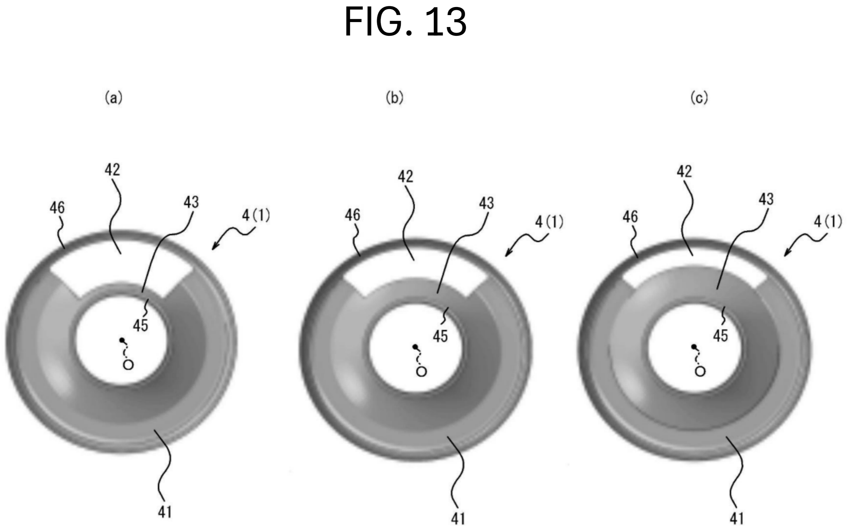

More specifically, a secondary peak value or a tertiary peak value of the absolute spring constant in the axial line direction of the anti-vibration bush 1 of each example falling into the scope of the present invention is lower by 20% or more as compared with each reference bushing B. Hereinbelow, this will be described with reference to the analysis results represented in Figs. 8 to 14 and tables 1 and 2.

Figs. 8 to 13 illustrate the models of the rubber bodies 4 of the respective examples used in the FEM analysis. Fig. 8 illustrates the rubber body 4 of the reference bushing B corresponding to the anti-vibration bushs 1 according to the respective examples illustrated in Figs. 9 to 13. Figs. 9, 10(a) to 10(d), 11(a) to 11(c), 12(a) to 12(c), and 13(a) to 13(c) respectively illustrate the rubber bodies 4 of the anti-vibration bushs 1 of different examples.

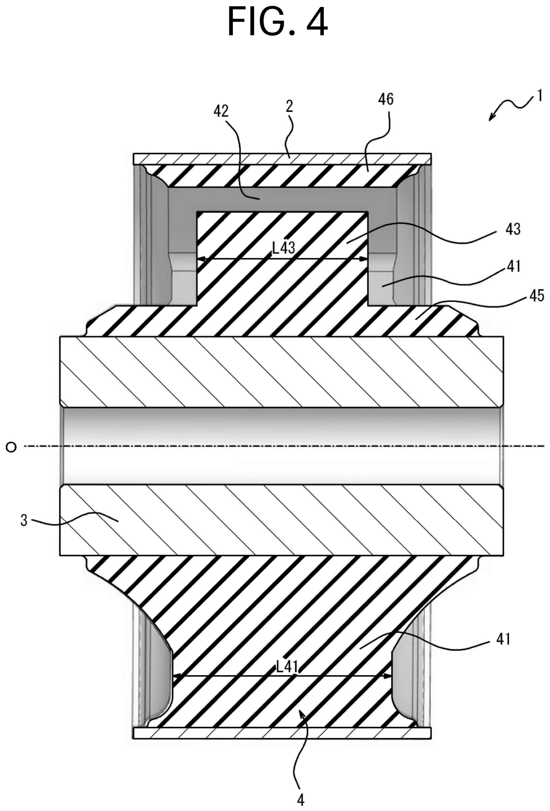

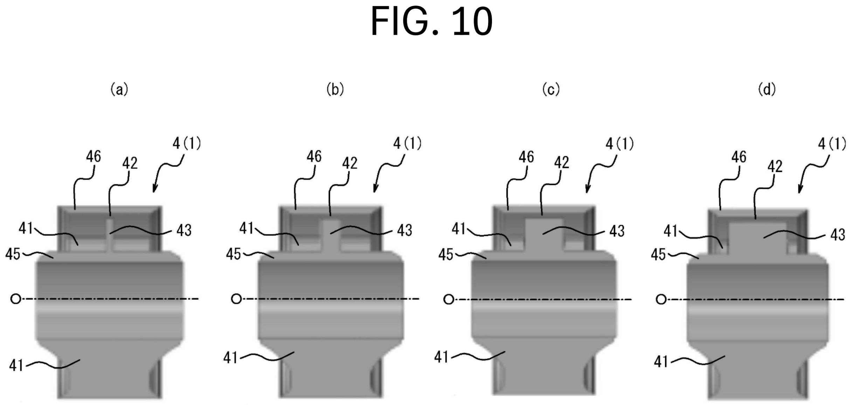

The details of the rubber bodies 4 of the respective examples of Figs. 8 to 13 are as represented in tables 1 and 2 below. The rubber bodies 4 of the respective examples of Figs. 8 to 13 have the same outer diameter, inner diameter, and axial line direction length, and the physical properties of the rubber bodies 4 are also the same. The rubber body 4 of each of the examples of Figs. 9 to 13 has the hollow 42, and the stopper rubber section 43 that faces the hollow 42 in the radial direction and is coupled to the main body rubber section 41 so as to be able to move in direct conjunction with the main body rubber section 41. The rubber body 4 of the first embodiment illustrated in Fig. 9 basically has the same configuration as the embodiment illustrated in Figs. 1 to 4, but is different from the embodiment illustrated in Figs. 1 to 4 in that an axial line direction length L43 (Fig. 4) of the stopper rubber section 43 is the same as an axial line direction length L41 (Fig. 4) of the main body rubber section 41. As compared with the first embodiment illustrated in Fig. 9, each of the examples illustrated in Figs. 10 to 13 is different only in "the difference in configuration from the first embodiment" described in tables 1 and 2.

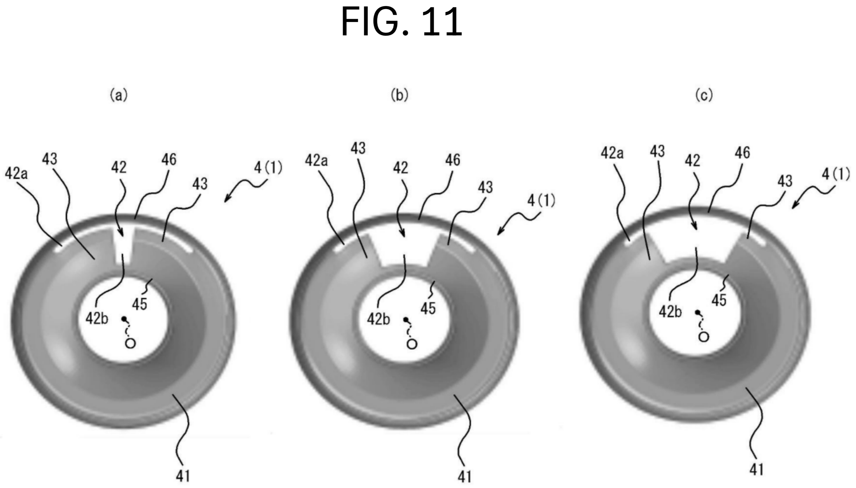

In each of the examples of Figs. 11(a) to 11(c), the hollow 42 has a circumferential direction hollow section 42a that extends along the circumferential direction, and a radial direction hollow section 42b that extends from the circumferential direction center of the circumferential direction hollow section 42a to the radial direction inner side, and the circumferential direction hollow section 42a has the same configuration as the hollow 42 of the first embodiment (Fig. 9). In addition, in each of the examples of Figs. 11(a) to 11(c), one stopper rubber section 43 (two in total) is provided on each side of the radial direction hollow section 42b in the circumferential direction.

In tables 1 and 2, the "angle range" is referred to as an angle range about the center axial line O. The angle range of the hollow 42 of the first embodiment (Fig. 9) is 90°.

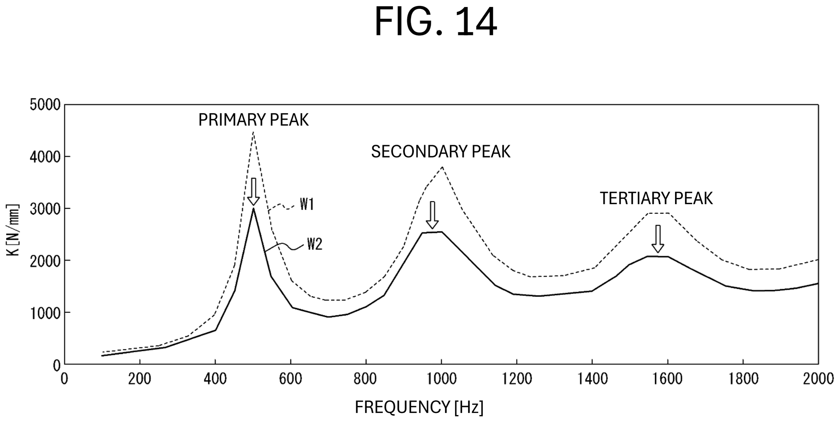

In the FEM analysis, by assuming the situation where the inner cylinder 3 vibrates in the axial line direction with respect to the outer cylinder 2, in the model of the rubber body 4 of each of the examples, the inner circumference surface of the rubber body 4 is reciprocatively moved in the axial line direction with respect to the outer circumference surface of the rubber body 4 at each frequency in the state of no preload, and the absolute spring constant (absolute spring constant K in the axial line direction) at each frequency is measured. The results thereof are represented in Fig. 14 and tables 1 and 2.

In the graph of Fig. 14, the horizontal axis represents the frequency (Hz), and the vertical axis represents the absolute spring constant K (N/mm) in the axial line direction. In Fig. 14, a waveform W1 is the waveform of the result of the above FEM analysis performed with respect to the rubber body 4 of the reference bushing B illustrated in Fig. 8, and a waveform W2 is the waveform of the result of the above FEM analysis performed with respect to the rubber body 4 of the anti-vibration bush 1 of the first embodiment illustrated in Fig. 9. As seen from Fig. 14, each of the waveforms W1 and W2 of the absolute spring constants K in the axial line direction of the reference bushing B and the anti-vibration bush 1 according to the first embodiment has three peaks of a primary peak, a secondary peak, and a tertiary peak caused by the surging, and at each of these three peaks, the peak value of the absolute spring constant K of the anti-vibration bush 1 of the first embodiment is lower than that of the reference bushing B. At each of the secondary peak and the tertiary peak, table 1 represents, by a rate (%), how much the anti-vibration bush 1 of the first embodiment can reduce the peak value of the absolute spring constant K as compared with the reference bushing B. It should be noted that for calculating the rate, as the peak value of the secondary peak of the absolute spring constant K in the axial line direction, specifically, the value of the absolute spring constant K at 1000 Hz is used, and in addition, as the peak value of the tertiary peak of the absolute spring constant K in the axial line direction, specifically, the value of the absolute spring constant K at 1600 Hz is used.

Also for the anti-vibration bush 1 of each of the examples illustrated in Figs. 10 to 13, like the anti-vibration bush 1 of the first embodiment, the waveform of the absolute spring constant K in the axial line direction has three peaks. Like the first embodiment, tables I and 2 represent, by a rate (%), how much the anti-vibration bush 1 of each of the examples illustrated in Figs. 10 to 13 can reduce the peak value of the absolute spring constant K at each of the secondary peak and the tertiary peak as compared with the reference bushing B illustrated in Fig. 8.

**[Table 1]**

| | REFERENCE BUSH | FIRST EMBODIMENT | SECOND EMBODIMENT | THIRD EMBODIMENT | FOURTH EMBODIMENT | FIFTH EMBODIMENT | SIXTH EMBODIMENT | SEVENTH EMBODIMENT | EIGHTH EMBODIMENT |
|---|---|---|---|---|---|---|---|---|---|
| DRAWING | FIG. 8 | FIG. 9 | FIG. 10(a) | FIG. 10(b) | FIG. 10(c) | FIG. 10(d) | FIG. 11(a) | FIG. 11(b) | FIG. 11(c) |
| PRESENCE OR ABSENCE OF HOLLOW 42 AND STOPPER RUBBER SECTION 43 | ABSENT | PRESENT | PRESENT | PRESENT | PRESENT | PRESENT | PRESENT | PRESENT | PRESENT |
| DIFFERENCE IN CONFIGURATION FROM FIRST EMBODIMENT | - | - | AXIAL LINE DIRECTION LENGTH OF STOPPER RUBBER SECTION 43 IS 1/10 TIMES FIRST EMBODIMENT. | AXIAL LINE DIRECTION LENGTH OF STOPPER RUBBER SECTION 43 IS 1/4 TIMES FIRST EMBODIMENT. | AXIAL LINE DIRECTION LENGTH OF STOPPER RUBBER SECTION 43 IS 1/2 TIMES FIRST EMBODIMENT. | AXIAL LINE DIRECTION LENGTH OF STOPPER RUBBER SECTION 43 IS 3/4 TIMES FIRST EMBODIMENT. | HOLLOW 42 HAS, IN ADDITION TO CIRCUMFERENTIAL DIRECTION HOLLOW SECTION 42a THAT IS SAME AS FIRST EMBODIMENT, RADIAL DIRECTION HOLLOW SECTION 42b HAVING ANGLE RANGE OF 15°. | HOLLOW 42 HAS, IN ADDITION TO CIRCUMFERENTIAL DIRECTION HOLLOW SECTION 42a THAT IS SAME AS FIRST EMBODIMENT, RADIAL DIRECTION HOLLOW SECTION 42b HAVING ANGLE RANGE OF 45°. | HOLLOW 42 HAS, IN ADDITION TO CIRCUMFERENTIAL DIRECTION HOLLOW SECTION 42a THAT IS SAME AS FIRST EMBODIMENT, RADIAL DIRECTION HOLLOW SECTION 42b HAVING ANGLE RANGE OF 60°. |
| REDUCTION RATE (%) OF PEAK VALUE AT SECONDARY PEAK (1000 Hz) WHEN COMPARED WITH REFERENCE BUSHING | - | 34 | 34 | 35 | 36 | 34 | 30 | 35 | 37 |
| REDUCTION RATE (%) OF PEAK VALUE AT TERTIARY PEAK (1600 Hz) WHEN COMPARED WITH REFERENCE BUSHING | - | 29 | 31 | 30 | 31 | 34 | 33 | 37 | 35 |

**[Table 2]**

| | REFERENCE BUSHING | FIRST COMPARATIVE EMBODIMENT | SECOND COMPARATIVE EMBODIMENT | NINTH EMBODIMENT | TENTH EMBODIMENT | ELEVENTH EMBODIMENT | TWELFTH EMBODIMENT |
|---|---|---|---|---|---|---|---|
| DRAWING | FIG. 8 | FIG. 12(a) | FIG. 12(b) | FIG. 12(c) | FIG. 13(a) | FIG. 13(b) | FIG. 13(c) |
| PRESENCE OR ABSENCE OF HOLLOW 42 AND STOPPER RUBBER SECTION 43 | ABSENT | PRESENT | PRESENT | PRESENT | PRESENT | PRESENT | PRESENT |
| DIFFERENCE IN CONFIGURATION FROM FIRST EMBODIMENT | - | ANGLE RANGE OF HOLLOW 42 IS 15°. | ANGLE RANGE OF HOLLOW 42 IS 45°. | ANGLE RANGE OF HOLLOW 42 IS 60°. | RADIAL DIRECTION LENGTH OF STOPPER RUBBER SECTION 43 IS 1/4 TIMES FIRST EMBODIMENT. | RADIAL DIRECTION LENGTH OF STOPPER RUBBER SECTION 43 IS 1/2 TIMES FIRST EMBODIMENT. | RADIAL DIRECTION LENGTH OF STOPPER RUBBER SECTION 43 IS 3/4 TIMES FIRST EMBODIMENT. |
| REDUCTION RATE (%) OF PEAK VALUE AT SECONDARY PEAK (1000 Hz) WHEN COMPARED WITH REFERENCE BUSHING | - | 3 | 16 | 24 | 31 | 32 | 36 |
| REDUCTION RATE (%) OF PEAK VALUE AT TERTIARY PEAK (1600 Hz) WHEN COMPARED WITH REFERENCE BUSHING | - | 3 | 14 | 20 | 29 | 30 | 33 |

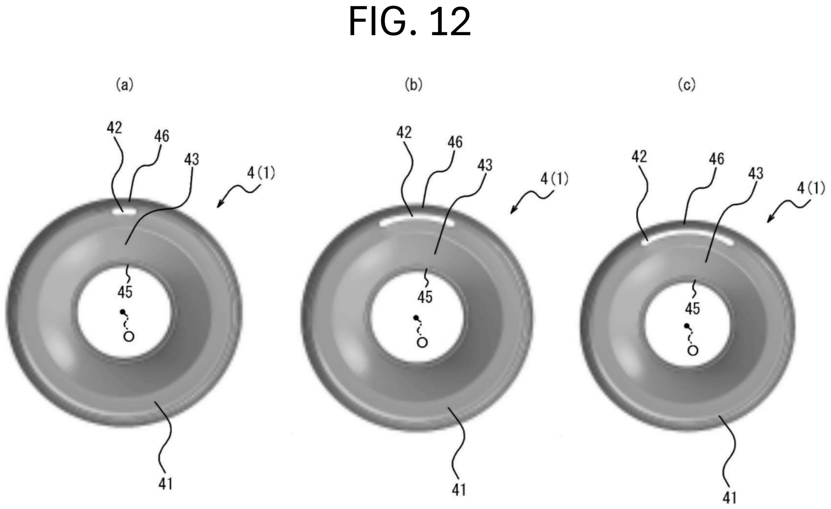

As represented in tables 1 and 2, the vibration-proof bushing 1 including the rubber body 4 of each of the examples of Figs. 9, 10(a) to 10(d), 11(a) to 11(c), 12(c), and 13(a) to 13(c) in which the secondary peak value (the peak value at the secondary peak) or the tertiary peak value (the peak value at the tertiary peak) (in this example, the secondary peak value and the tertiary peak value) of the absolute spring constant K in the axial line direction is lower by 20% or more as compared with the reference busing B corresponds to each of the embodiments (each of the first to twelfth embodiments) falling into the scope of the present invention, and the anti-vibration bush 1 including the rubber body 4 of each of the examples of Figs. 12(a) and 12(b) in which the reduction rate of the secondary peak value or the tertiary peak value (in this example, the secondary peak value and the tertiary peak value) of the absolute spring constant K in the axial line direction when compared with the reference bushing B is less than 20% corresponds to each of the comparative examples (each of the comparative examples 1 and 2) outside the scope of the present invention.

As seen from each of the embodiments of Figs. 9, 10(a) to 10(d), 11(a) to 11(c), 12(c), and 13(a) to 13(c), the anti-vibration bush 1 including the stopper rubber section 43 and the hollow 42 in various shapes can fall into the scope of the present invention. In addition, as seen from each of the comparative examples of Figs. 12(a) and 12(b), even in the case where the rubber body 4 has the hollow 42, and the stopper rubber section 43 that faces the hollow 42 in the radial direction and is coupled to the main body rubber section 41 so as to be able to move in direct conjunction with the main body rubber section 41, the secondary peak value or the tertiary peak value of the absolute spring constant K in the axial line direction cannot be always reduced by 20% or more as compared with the reference bushing B, according to the mass, the physical property, the material quality, and the like of the stopper rubber section 43.

As described above, to reduce the peak value of the absolute spring constant K in the axial line direction, the regulation of the mass of the stopper rubber section 43 particularly greatly contributes to this, and besides, the regulation of the physical property and the material quality of the stopper rubber section 43 can alco greatly contribute to this. In addition, the regulation of the shapes of the stopper rubber section 43 and the hollow 42 is considered to be able to contribute to this at least to some extent.

As described above, in the anti-vibration bush 1 of each of the examples of the present invention, as described above, the secondary peak value or the tertiary peak value of the absolute spring constant in the axial line direction is lower by 20% or more as compared with the reference bushing B. Further, the increase in the absolute spring constant caused by the surging in the axial line direction can be suppressed (that is, the lowered spring constant in the axial line direction is enabled). Therefore, for example, when the anti-vibration bush 1 is used as the vibration-proof device of the vehicle (for example, the engine mount and the motor mount, in particular, the vibration-proof device of the electric vehicle (EV) (for example, the motor mount)), the more desirable vibration-proof characteristic can be provided. It should be noted that in particular, in the vibration-proof device (for example, the motor mount) of the electric vehicle (EV), in particular, for the vibration in the high frequency region, also in the vibration in any direction, the suppression of the increase in the absolute spring constant caused by the surging (that is, the lowered spring constant) is required.

In the present invention, the reduction rate of the secondary peak value or the tertiary peak value of the absolute spring constant in the axial line direction is lowered to 20% or more, so that the increase in the absolute spring constant caused by the surging in the axial line direction can be reliably suppressed.

Then, in the anti-vibration bush 1 of each of the examples of the present invention, in achieving that the secondary peak value or the tertiary peak value of the absolute spring constant in the axial line direction is lower by 20% or more as compared with the reference bushing B, as described above, the rubber body 4 has the hollow 42, and the stopper rubber section 43 that faces the hollow 42 in the radial direction and is coupled to the main body rubber section 41 so as to be able to move in direct conjunction with the main body rubber section 41. By such the configuration of the rubber body 4, as described above, while the inner cylinder 3 relatively vibrates in the axial line direction with respect to the outer cylinder 2, the stopper rubber section 43 can be at least partially displaced to the opposite side of the main body rubber section 41 in the axial line direction. With this, a part of the force to one of the sides in the axial line direction caused by the main body rubber section 41 is offset by the force to the axial line direction other side caused by the stopper rubber section 43. In this way, in the case of the vibration in the axial line direction, the stopper rubber section 43 can exhibit the function as the dynamic damper, so that the increase in the absolute spring constant caused by the surging in the axial line direction can be suppressed, in other words, the lowered spring constant in the axial line direction is enabled. If the stopper rubber section 43 is not coupled to the main body rubber section 41, and if the stopper rubber section 43 is coupled to the main body rubber section 41 (via the rubber section in thin film shape and the like) but is not able to move in conjunction with the main body rubber section 41, the stopper rubber section 43 cannot be displaced to the opposite side of the main body rubber section 41 in the axial line direction in the case of the vibration in the axial line direction, so that the stopper rubber section 43 is less likely to exhibit the function as the dynamic damper, and cannot suppress the increase in the absolute spring constant caused by the surging in the axial line direction.

In addition, in the anti-vibration bush 1 of each of the examples of the present invention, as described above, the stopper rubber section 43 also has the function as the stopper that restricts the excessive relative displacement between the inner cylinder 3 and the outer cylinder 2 in the direction perpendicular to the axial line direction. Therefore, two points of the lowered spring constant in the axial line direction required in the vibration-proof device of the vehicle and the restriction of the excessive displacement between the inner cylinder 3 and the outer cylinder 2 in the direction perpendicular to the axial line direction can be achieved by the same stopper rubber section 43.

In the anti-vibration bush 1 of each of the examples of the present invention, as compared with the reference bushing B, only one of the secondary peak value and the tertiary peak value of the absolute spring constant in the axial line direction may be lower by 20% or more, but both of the secondary peak value and the tertiary peak value are preferably lower by 20% or more.

It should be noted that in the anti-vibration bush 1 for the actual product, as a method for calculating the reduction rate of the secondary peak value or the tertiary peak value of the absolute spring constant in the axial line direction when compared with the reference bushing B, for example, the following method is given. For the anti-vibration bush 1, first, the secondary peak value or the tertiary peak value of the absolute spring constant in the axial line direction of the anti-vibration bush 1 for the actual product is calculated by an experiment, and the physical property of the rubber body 4 of the anti-vibration bush 1 for the actual product is calculated by measurement or analysis, so that the physical property of the rubber body 4 of the anti-vibration bush 1 for the actual product, which is calculated above is inputted to the model anti-vibration bush 1 having the rubber body 4 of the anti-vibration bush 1 modeled for the FEM analysis (that is, having the same shape and size as the actual anti-vibration bush 1) to calculate the secondary peak value or the tertiary peak value of the model anti-vibration bush 1 by the FEM analysis, and the relationship of the secondary peak value or the tertiary peak value between the anti-vibration bush 1 for the actual product and the model anti-vibration bush 1 is confirmed. On the other hand, for the reference bushing B, the physical property of the rubber body 4 of the anti-vibration bush 1 for the actual product, which is calculated above is inputted to the model of the rubber body 4 of the reference bushing B (model reference bushing B) which is made for the FEM analysis and corresponds to the anti-vibration bush 1, the secondary peak value or the tertiary peak value of the absolute spring constant in the axial line direction of the rubber body 4 of the model reference bushing B is calculated by the FEM analysis, and on the basis of the relationship between the secondary peak value or the tertiary peak value of the absolute spring constant in the axial line direction of the rubber body 4 of the model reference bushing B and the secondary peak value or the tertiary peak value between the anti-vibration bush 1 for the actual product and the model anti-vibration bush 1, the secondary peak value or the tertiary peak value of the reference bushing B for the temporary actual product is calculated. Then, the reduction rate is calculated by using the secondary peak values or the tertiary peak values of the anti-vibration bush 1 for the actual product and the reference bushing B for the temporary actual product, which are calculated as above.

It should be noted that from the same viewpoint, the secondary peak value of the absolute spring constant in the axial line direction of the anti-vibration bush 1 is preferably lower by 24% or more as compared with the reference bushing B.

From the same viewpoint, the tertiary peak value of the absolute spring constant in the axial line direction of the anti-vibration bush 1 is preferably lower by 24% or more as compared with the reference bushing B.

In addition, as compared with the reference bushing B, the secondary peak value of the absolute spring constant in the axial line direction of the anti-vibration bush 1 may be lower only by 40% or less, and may be lower only by 37% or less.

In addition, as compared with the reference bushing B, the tertiary peak value of the absolute spring constant in the axial line direction of the anti-vibration bush 1 may be lower only by 40% or less, and may be lower only by 37% or less.

As described above, the hollow 42 and the stopper rubber section 43 can have various configurations.

For example, like each of the examples illustrated in Figs. 1, 9 to 13, and 15, at least one stopper rubber section 43 (in each of the examples illustrated in Figs. 1, 9, 10, 12, 13, and 15, one stopper rubber section 43, and in each of the examples illustrated in Fig. 11, two stopper rubber sections 43) may be positioned on the radial direction inner side with respect to at least a part of the hollow 42 (in each of the examples illustrated in Figs. 1, 9, 10, 12, 13, and 15, all of the hollow 42, and in each of the examples illustrated in Figs. 11, only the circumferential direction hollow section 42a of the hollow 42). In this case, the at least one stopper rubber section 43 faces the at least part of the hollow 42 in the radial direction. In this case, the stopper rubber section 43 that is to be in conjunction with the main body rubber section 41 can be easily formed.

In this case, the rubber body 4 may have the outer circumference side covering rubber section 46 between the hollow 42 and the outer cylinder 2. The outer circumference surface of the outer circumference side covering rubber section 46 is in contact with (and joined to) the inner circumference surface of the outer cylinder 2. The outer circumference side covering rubber section 46 is coupled to the main body rubber section 41 at the end portions on both sides in the circumferential direction of the outer circumference side covering rubber section 46, but is not configured to be able to move in conjunction with the main body rubber section 41. Alternatively, without providing the outer circumference side covering rubber section 46 between the hollow 42 and the outer cylinder 2, a part of the hollow 42 may be sectioned by a part of the inner circumference surface of the outer cylinder 2.

In addition, in this case, the rubber body 4 may have the inner circumference side covering rubber section 45 between the stopper rubber section 43 and the inner cylinder 3. The inner circumference surface of the inner circumference side covering rubber section 45 is in contact with (and joined to) the outer circumference surface of the inner cylinder 3. The inner circumference side covering rubber section 45 is coupled to the main body rubber section 41 at the end portions on both sides in the circumferential direction of the inner circumference side covering rubber section 45, but is not configured to be able to move in conjunction with the main body rubber section 41. Alternatively, without providing the inner circumference side covering rubber section 45 between the stopper rubber section 43 and the inner cylinder 3, the inner circumference surface of the stopper rubber section 43 may be in direct contact with (joined to) the outer circumference of the inner cylinder 3.

In addition, in this case, like each of the examples illustrated in Figs. 1, 9 to 13, and 15, the hollow 42 may extend along the circumferential direction. Alternatively, like each of the examples illustrated in Figs. 11, the hollow 42 may have the circumferential direction hollow section 42a that extends along the circumferential direction, and the radial direction hollow section 42b that extends from any portion of the circumferential direction hollow section 42a (for example, the center in the circumferential direction) to the radial direction inner side. In this case, like each of the examples of Figs. 11(a) to 11(c), one stopper rubber section 43 (two in total) may be provided on each side of the radial direction hollow section 42b in the circumferential direction. Alternatively, the hollow 42 may form any other shape.

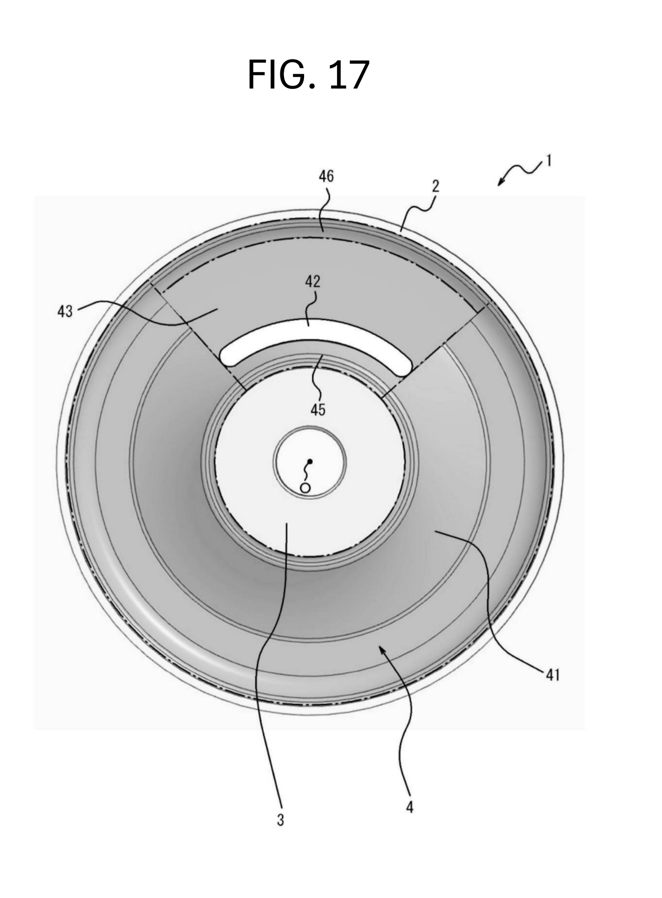

Alternatively, for example, like a modification example illustrated in Fig. 17, at least one (in the example of Fig. 17, one) stopper rubber section 43 may be positioned on the radial direction outer side with respect to at least a part of the hollow 42 (in the example of Fig. 17, all of the hollow 42). In this case, the at least one stopper rubber section 43 faces the at least part of the hollow 42 in the radial direction. Also in this case, the stopper rubber section 43 that is to be in conjunction with the main body rubber section 41 can be easily formed.

In this case, the rubber body 4 may or may not have the outer circumference side covering rubber section 46 between the stopper rubber section 43 and the outer cylinder 2. In addition, the rubber body 4 may or may not have the inner circumference side covering rubber section 45 between the hollow 42 and the inner cylinder 3.

In addition, in this case, the hollow 42 may extend along the circumferential direction. Alternatively, the hollow 42 may have the circumferential direction hollow section 42a that extends along the circumferential direction, and the radial direction hollow section 42b that extends from any portion of the circumferential direction hollow section 42a (for example, the center in the circumferential direction) to the radial direction outer side. In this case, one stopper rubber section 43 (two in total) may be provided on each side of the radial direction hollow section 42b in the circumferential direction. Alternatively, the hollow 42 may form any other shape.

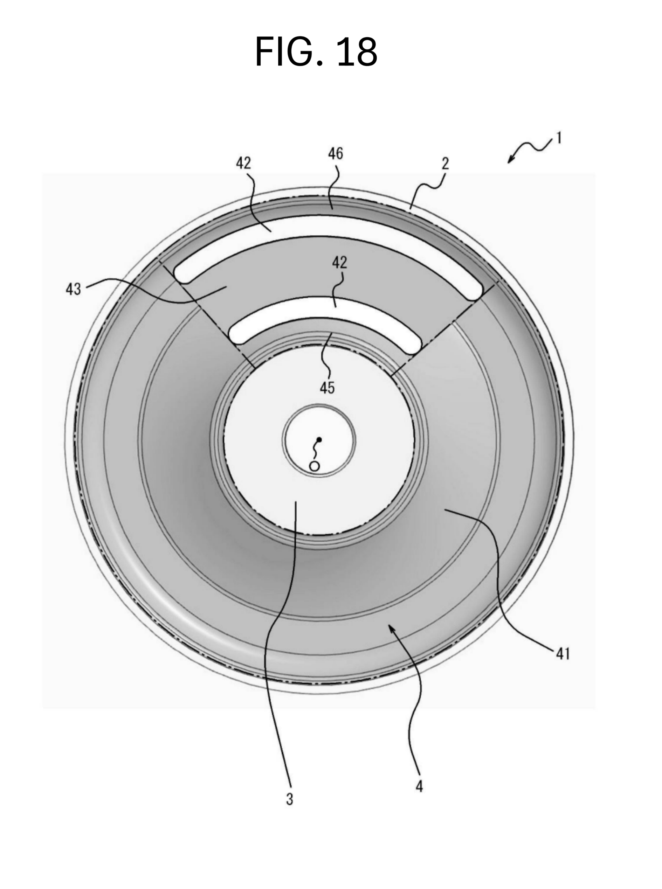

Alternatively, for example, like another modification example illustrated in Fig. 18, two hollows 42 may be disposed to be spaced from each other in the radial direction, and at least one (in the example of Fig. 18, one) stopper rubber section 43 may be disposed between these two hollows 42. In this case, the at least one stopper rubber section 43 faces each of these two hollows 42 in the radial direction. Also in this case, the stopper rubber section 43 that is to be in conjunction with the main body rubber section 41 can be easily formed.

In this case, the rubber body 4 may or may not have the outer circumference side covering rubber section 46 between one of the hollows 42 and the outer cylinder 2. In addition, the rubber body 4 may or may not have the inner circumference side covering rubber section 45 between the other hollow 42 and the inner cylinder 3.

In addition, although not illustrated, the rubber body 4 may have a plurality of hollows 42. These plurality of hollows 42 may be at positions different from each other in the circumferential direction, and/or may be at positions different from each other in the radial direction. In this case, at least one stopper rubber section 43 preferably faces each of the hollows 42 in the radial direction. Also in this case, the stopper rubber section 43 that is to be in conjunction with the main body rubber section 41 can be easily formed.

In each of the examples described in the present specification, like each of the examples illustrated in Figs. 4, 9, and 10, the axial line direction length L43 (Fig. 4) of the stopper rubber section 43 is preferably equal to or less than the axial line direction length L41 (Fig. 4) of the main body rubber section 41. It should be noted that in the example of Fig. 9, L43 = L41, and in each of the examples illustrated in Figs. 4 and 10, L43 < L41.

With this, the stopper rubber section 43 moves in the axial line direction more easily, so that the increase in the absolute spring constant caused by the surging in the axial line direction can be further suppressed.

It should be noted that the axial line direction length L43 (Fig. 4) of the stopper rubber section 43 is referred to, when the axial line direction length of the stopper rubber section 43 is not uniform along the radial direction and/or the circumferential direction, as the minimum axial line direction length thereof. Likewise, the axial line direction length L41 (Fig. 4) of the main body rubber section 41 is referred to, when the axial line direction length of the main body rubber section 41 is not uniform along the radial direction and/or the circumferential direction, as the minimum axial line direction length thereof.

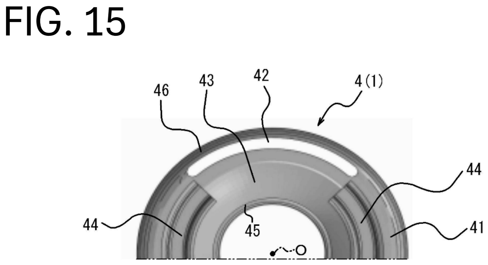

In each of the examples described in the present specification, like each of the examples illustrated in Figs. 6 and 15, the rubber body 4 may further have a circumferential direction rubber mass section 44 that protrudes from the end surface on at least one side in the axial line direction of the main body rubber section 41 to the axial line direction outer side and extends in the circumferential direction. In this case, the increase in the absolute spring constant caused by the surging in the axial line direction can be further suppressed, and in addition, the increase in the absolute spring constant caused by the surging can be suppressed also in the direction perpendicular to the axial line direction.

It should be noted that Fig. 15 illustrates the model of the rubber body 4 of a still another example used in the FEM analysis described above. The rubber body 4 of the example of Fig. 15 corresponds to one in which with respect to the rubber body 4 of the example of Fig. 9, the circumferential direction rubber mass section 44 that protrudes to the axial line direction outer side and extends in the circumferential direction is provided on the end surfaces on both sides in the axial line direction of the main body rubber section 41. The rubber body 4 of the reference bushing B corresponding to the anti-vibration bush 1 including the rubber body 4 of the example of Fig. 15 is illustrated in Fig. 8.

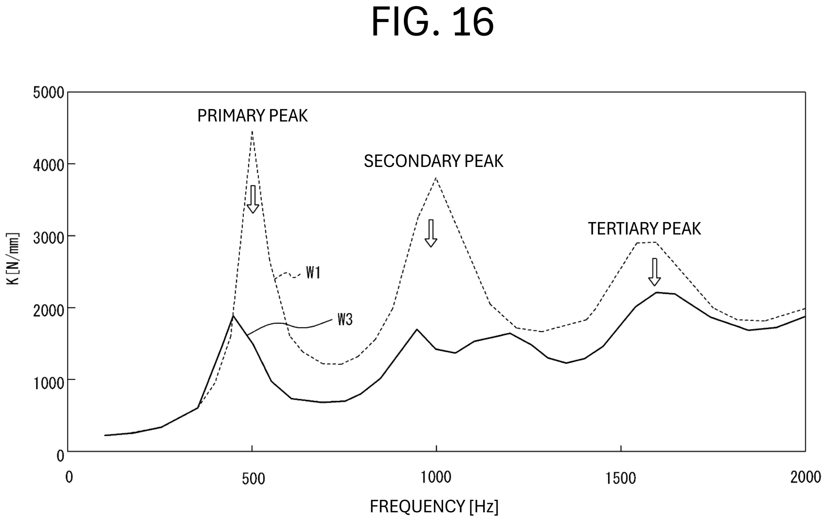

The graph of Fig. 16 is the same graph as the graph of Fig. 14, the waveform W1 is the waveform of the result of the above FEM analysis performed with respect to the rubber body 4 of the reference bushing B illustrated in Fig. 8, and a waveform W3 is the waveform of the result of the above FEM analysis performed with respect to the rubber body 4 of the anti-vibration bush 1 of the example illustrated in Fig. 15. As seen from the comparison between Figs. 14 and 16, the waveform W3 (Fig. 16) of the anti-vibration bush 1 of the example illustrated in Fig. 15 can further reduce the secondary peak value of the absolute spring constant K with respect to the waveform W1 of the reference bushing B, as compared with the waveform W2 (Fig. 14) of the anti-vibration bush 1 of the example illustrated in Fig. 9.

The rubber body 4 is preferably formed of a rubber made by crosslinking a rubber composition that contains a rubber component having, as main constituents, a natural rubber and a non-diene rubber.

With this, the increase in the absolute spring constant caused by the surging can be further suppressed.

Here, "a rubber component having, as main constituents, a natural rubber and a non-diene rubber" is referred to as a rubber component in which for the rubber component, the natural rubber and the non-diene rubber are contained, and the total amount of the natural rubber and the non-diene rubber of the rubber component is 50 mass% or more with respect to the total amount of the rubber component. More preferably, the total amount of the natural rubber and the non-diene rubber of the rubber component is more than 50 mass% with respect to the total amount of the rubber component. The rubber component may contain only the natural rubber and the non-diene rubber, and may contain a rubber other than the natural rubber and the non-diene rubber. As the rubber other than the natural rubber and the non-diene rubber, for example, a diene-rubber is given.

In the above case, by a mass ratio, the blending ratio of the natural rubber and the non-diene rubber of the rubber composition (the natural rubber : the non-diene rubber) is preferably 95:5 to 50:50, is more preferably 95:5 to 60:40, is still preferably 95:5 to 65:35, and is still further preferably 80:20 to 70:30.

The above natural rubber (NR) is not particularly limited, and a known one should be selected and used, as needed, and for example, RSS (Ribbed smoked sheets), TSR (Technically Specified Rubber), and the like are given.

In addition, the above non-diene rubber is not particularly limited, a known one should be selected and used, as needed, and for example, a butyl rubber (IIR), a chlorinated butyl rubber (CIIR), a brominated butyl rubber (BIIR), an ethylene propylene norbornene rubber (EPDM), an ethylene acrylic rubber (AEM), a polyacrylic rubber (ACM), a silicone rubber (VMQ), a fluororubber (FKM), a polyurethane rubber (AU), an ester-based polyurethane rubber (EU), a polyether ether ketone rubber (PEEK), and the like are given, and in the above respective embodiments, in particular, the above non-diene rubber is preferably the butyl rubber (IIR), the chlorinated butyl rubber (CIIR), or the brominated butyl rubber (BIIR).

However, the rubber forming the rubber body 4 may not be the above rubber, and in addition, may be one in which two or more types of rubbers are integrated, as needed.

### Industrial Applicability

For example, an anti-vibration bush according to the present invention is preferably used for the vibration-proof device (for example, the engine mount and the motor mount) of a vehicle, and is particularly preferably used for the vibration-proof device (for example, the motor mount) of an electric vehicle (EV).

### List of Reference Signs

- 1:: anti-vibration bush
- B:: reference bushing
- 2:: outer cylinder
- 3:: inner cylinder
- 4:: rubber body
- 41:: main body rubber section
- 42:: hollow
- 42a:: circumferential direction hollow section
- 42b:: radial direction hollow section
- 43:: stopper rubber section
- 44:: circumferential direction rubber mass section
- 45:: inner circumference side covering rubber section
- 46:: outer circumference side covering rubber section
- O:: center axial line

## Claims

1. An anti-vibration bush comprising:
an outer cylinder;
an inner cylinder; and
a rubber body positioned between the outer cylinder and the inner cylinder,
wherein the rubber body includes:
a main body rubber section that couples the outer cylinder and the inner cylinder to each other in a radial direction and extends over only a part in a circumferential direction;
a hollow that is positioned in a circumferential direction region other than a circumferential direction region in which the main body rubber section extends and penetrates through the rubber body in an axial line direction; and
a stopper rubber section that faces the hollow in the radial direction,
wherein the stopper rubber section is coupled to the main body rubber section so as to be able to move in direct conjunction with the main body rubber section, and
wherein a secondary peak value or a tertiary peak value of an absolute spring constant in an axial line direction of the anti-vibration bush is lower by 20% or more as compared with a reference bushing in which the main body rubber section of the anti-vibration bush is extended over an entire circumference and the rubber body is configured only of the main body rubber section.

2. The anti-vibration bush according to claim 1,
wherein the stopper rubber section is configured such that while the inner cylinder vibrates in the axial line direction with respect to the outer cylinder, the stopper rubber section can be displaced to an opposite side of the main body rubber section in the axial line direction.

3. The anti-vibration bush according to claim 1,
wherein at least one stopper rubber section is positioned on a radial direction inner side with respect to at least a part of the hollow.

4. The anti-vibration bush according to claim 1,
wherein at least one stopper rubber section is positioned on a radial direction outer side with respect to at least a part of the hollow.

5. The anti-vibration bush according to claim 1,
wherein the two hollows are disposed to be spaced from each other in the radial direction, and
wherein at least one stopper rubber section is disposed between the two hollows.

6. The anti-vibration bush according to claim 1,
wherein the rubber body has a plurality of the hollows, and
wherein at least the one stopper rubber section faces each of the hollows in the radial direction.

7. The anti-vibration bush according to claim 1,
wherein an axial line direction length of the stopper rubber section is equal to or less than an axial line direction length of the main body rubber section.

8. The anti-vibration bush according to claim 1,
wherein the rubber body is formed of a rubber made by crosslinking a rubber composition that contains a rubber component having, as main constituents, a natural rubber and a non-diene rubber.

9. The anti-vibration bush according to claim 1,
wherein the rubber body further has a circumferential direction rubber mass section that protrudes from an end surface on at least one side in the axial line direction of the main body rubber section to the axial line direction outer side and extends in the circumferential direction.
